(19) Europäisches Patentamt
European Patent Office
Office européen des brevets

(11) **EP 4 336 416 A1**

(12) **EUROPEAN PATENT APPLICATION**

(43) Date of publication:
**13.03.2024 Bulletin 2024/11**

(21) Application number: **23196651.6**

(22) Date of filing: **11.09.2023**

(51) International Patent Classification (IPC):
**G06N 10/20** (2022.01)    **G06N 10/60** (2022.01)
**G06N 3/08** (2023.01)    **G06N 3/047** (2023.01)

(52) Cooperative Patent Classification (CPC):
**G06N 10/20; G06N 3/047; G06N 3/08; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.09.2022 US 202217941802
09.09.2022 EP 22382838**

(71) Applicant: **Multiverse Computing S.L.
20014 Donostia / San Sebastián (ES)**

(72) Inventors:
• **Orus, Roman
20014 Donostia / San Sebastián (ES)**
• **Del Bimbo, Gianni
20014 Donostia / San Sebastián (ES)**
• **Lizarralde, Unai
20014 Donostia / San Sebastián (ES)**

(74) Representative: **Harrison, Robert John et al
Sonnenberg Harrison Partnerschaft mbB
Herzogspitalstraße 10a
80331 München (DE)**

(54) **QUANTUM-BASED EXTREME LEARNING MACHINE**

(57) A quantum-based extreme learning machine and a method for training a quantum-based extreme learning machine using a quantum processor (50) implementing a quantum substrate (220) and a set of training data (260) is disclosed. The training data comprises input features vectors (400) with a plurality of N parameters (262) and true labels vector (265). The method comprises uploading (S610) the training data (260) to the quantum processor (50), encoding (S620) the uploaded training data (260), passing (S410, S630) a plurality of subsets of the input features vector (400) from the training data (260) through the quantum substrate (220) to obtain a plurality of output vectors of expectation values (420), concatenation (S420) of the plurality of output vectors of expectation values (420) to construct (S430) a matrix (430), computation (S440) of an inverse matrix (H) from the matrix (430) and multiplication (S450) of the inverse matrix (H) by the true labels vector (265) to obtain a vector (470) of optimal weights $\beta$.

Fig. 7

**Description**

<u>Cross Reference to Related Applications</u>

This application claims priority to and benefit of European Patent Application No EP 22 38 28 38.5 filed on 9 September 2022 and US Patent Application No 17/941,802 filed on 9 September 2022.

<u>Field of the Invention</u>

The invention relates to a method and system for extreme learning machine using a quantum processor or a quantum simulation processor.

<u>Background to the Invention</u>

One of the most promising directions for applying quantum computing in the quest for quantum advantage is machine learning (ML). There has been some effort in establishing possible routes to integrate quantum components in modern ML algorithms to ensure a training speedup and/or a performance enhancement, as is reported in Mujal et al "Opportunities in Quantum Reservoir Computing and Extreme Learning Machines," published 10 July 2021 on Arxiv.Org (DOI:arXiv:21 02.11831v2).

Keisuke Fujii et al. "Quantum reservoir computing: a reservoir approach toward quantum machine learning on near-term quantum devices", published 10 November 2020 on Arxiv.org, Cornell University Library, XP081810468, describe a quantum reservoir computing and related frameworks for quantum machine learning. However, this document does not disclose the use of quantum noise for machine learning algorithms.

Chinese Patent Application No. CN 110 009 108A, "Brand-new quantum extreme learning machine" by UNIV SHENYANG AEROSPACE, disclosed another quantum extreme learning machine based on quantum perception and standard extreme learning machine algorithm. This document also fails to disclose the use of quantum noise for machine learning algorithms.

One of the challenges in designing quantum components for machine learning algorithms is the need to deal with decoherence and correct for the unavoidable presence of hardware noise. Quantum Extreme Learning Machine (QELM) is a hybrid classical-quantum framework that tackles the matter from a different angle and takes advantage of the complex and noisy dynamics of current NISQ devices to improve the learning effectiveness of ML tasks. This strategy has seen some exploration for temporal tasks involving time series but an adaptation for complex non-temporal classification tasks is still missing. This document sets out a method and system for this purpose.

<u>Summary of the Invention</u>

This document describes a method and system for implementing a quantum-based machine learning system.

The quantum-based machine learning system uses noise in a quantum substrate (comprising a number of qubits). This noise causes the qubits to lose their quantum mechanical properties. This noise and the loss of the information in the qubits has traditionally been seen as a disadvantage. In the case of the quantum-based machine learning system, as set out in this document, the loss of the noise is found to introduce positive effect for information processing, as the noise creates non-linearities in the quantum substrate. In other words, the noise of the qubits can be used to enhance classical machine learning methods. The quantum-based machine learning system can leverage the rich dynamics that noisy quantum systems exhibit with their considerable number of degrees of freedom. The noise enables the generation of complex and interesting output states which are fed to the training layers.

Quantum noise is a strong limiting factor in gate-based quantum computing, so a paradigm like QELM shows a lot of potential and lends itself very well to current gate-based NISQ systems. A gate-based implementation, for example on superconducting quantum processors, can be realized and explained in two parts, data encoding and construction of the quantum substrate. There is no need, unlike in standard quantum computation, to implement the gates in the quantum substrate with as little noise as possible.

This document describes a method for implementing a quantum-based extreme learning machine using a quantum processor comprising a quantum substrate comprising a plurality of noisy quantum gates. The method comprises uploading an input features vector to the quantum substrate and applying, to the input features vector at the output of the quantum substrate, a vector of optimal weights β previously generated from training data using the quantum processor and thereby generating a vector of expectation values to enable prediction of a new data point b from the input features vector.

A method for training a quantum-based extreme learning machine using a quantum processor implementing a quantum substrate and a set of training data is also disclosed. The training data comprises input features vectors with a plurality of N parameters and true labels vector. As previously noted, the quantum substrate comprises a plurality of noisy quantum gates. The method comprises uploading the training data to the quantum processor and encoding the uploaded training data. The input features vector is divided into a plurality of subsets of the input features vector and the plurality of subsets are passed through the quantum substrate to obtain a plurality of output vectors of expectation values. The plurality of output vectors of expectation values is concatenated to construct a matrix and an inverse matrix is computed from the matrix. The output vector of the expectation values forms a row of the matrix.

This inverse matrix is multiplied by the true labels vector to obtain a vector of optimal weights $\beta$ which is used in the implementation of the extreme learning machine.

In one aspect, the inverse matrix is a Moore-Penrose pseudo inverse matrix.

In one aspect, the encoding is one of basis encoding, amplitude encoding, angle encoding, qsample encoding and Hamiltonian encoding and the encoding may be done redundantly.

The quantum substrate may comprise n qubits and wherein n<N.

The method further comprises in a further aspect a step of normalizing values of the training data.

In one aspect, the method comprises a step of redundantly encoding values of the training data.

A computing system for implementing a quantum-based extreme learning machine learning using a quantum processor comprising a quantum substrate is also disclosed. The computing system comprises a plurality of input/output devices for inputting training data and outputting the vector of optimal weights $\beta$. The computing system has a gate-based quantum processor for implementing the extreme learning machine (ELM) having an input layer, a quantum substrate with a plurality of noisy quantum gates and an output layer and a connection layer.

In one aspect, the noisy quantum gates are a plurality of controlled NOT gates (C-NOT or CX).

In yet another aspect, the quantum substrate is a quantum system with a number of qubits.

Description of the Figures

Fig. 1 shows an outline of a classical-quantum hybrid computer.
Fig. 2 shows an outline of an extreme learning machine.
Fig. 3 shows an example of a quantum circuit used in the quantum ELM.
Fig. 4 shows a flow chart for the quantum ELM.
Fig. 5 shows results of simulations for the quantum ELM.
Fig. 6 shows a flow diagram for the quantum ELM.
Fig. 7 shows a flow chart for the quantum ELM values calculation.
Fig. 8 shows four examples of datasets from scikit.
Fig. 9 shows the results of the accuracy when simulating the quantum ELM using the datasets from scikit.
10 shows the results of accuracy of the quantum ELM on a dataset representing breast cancer.

Detailed Description of the Invention

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

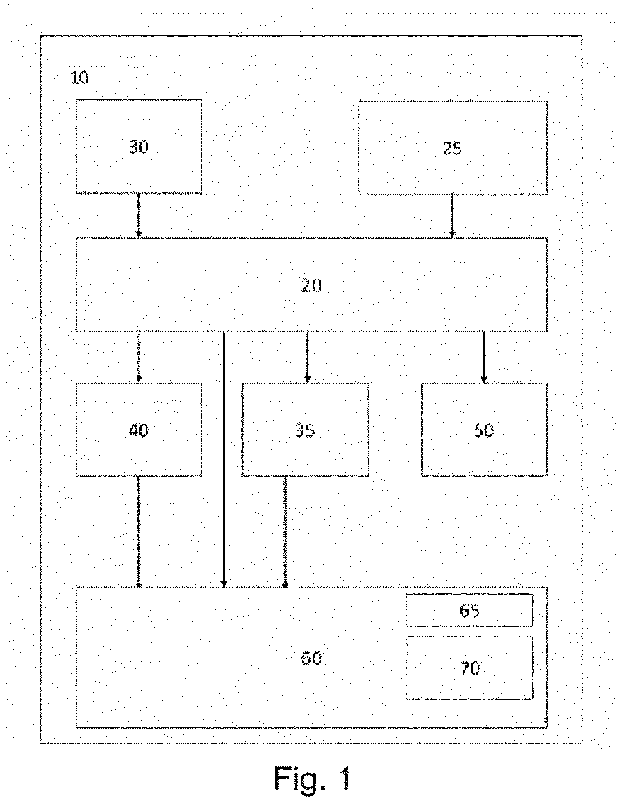

Fig. 1 shows an overview of a computing system 10 for implementing the method of this document. The computing system 10 is, for example, a hybrid quantum and classical system and comprises, in an example, a central processing unit 20 which is connected to a data storage unit 25 (i.e., one or more memory devices), and a plurality of input/output devices 30. The input/output devices 30 enable input of training data for training the computing system 10 and other data for processing and an output of the results of the processed data.

A graphics processing unit 35 for processing vector calculations and a field programmable gate array (FGPA) 40 for control logic can also be connected to the central processing unit 20. A quantum processor 50 (also termed quantum accelerator) is connected to the central processing unit 20. In an alternative embodiment, the quantum processor 50 is simulated on a classical processor.

In one implementation of the computing system 10, the quantum processor 50 can be a gate-based quantum processor, such as one developed by IBM Wave, but this is not limiting of the invention. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices 30 and data storage units 25 are connected by the computer network 60.

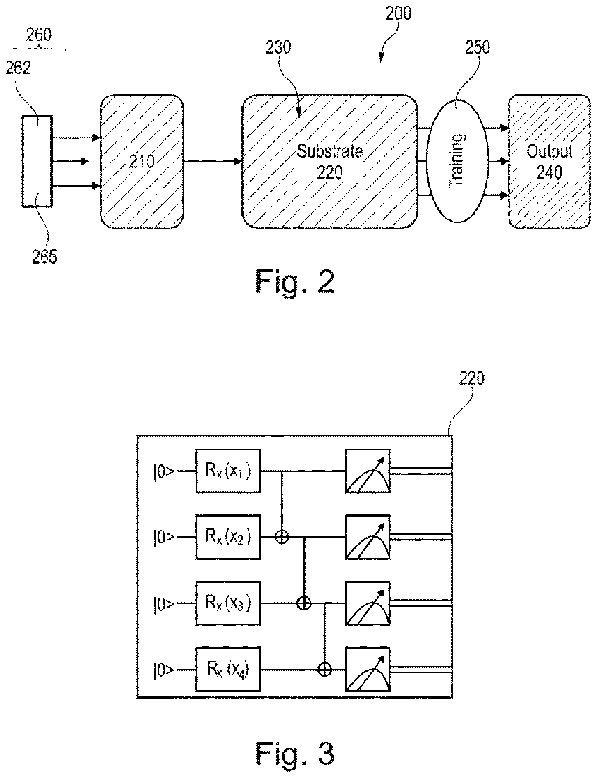

The inspiration for the quantum extreme learning machine method and system set out in this document is based on the classical counterpart, the Extreme Learning Machine (ELM) idea. The (classical) ELM is a learning machine (or method) that, unlike most of the neural networks learning methods, does not require gradient descent-based backpropagation and is a feed-forward neural network. The idea of the ELM is to pass the data through a complex fixed dynamical system, i.e., a classical neural network, termed a *"substrate"* and then to perform the training process, without tuning the substrate. Fig. 2 shows an outline of the extreme learning machine (ELM) 200 with an input layer 210, the substrate 220 with a plurality of so-called "hidden nodes" 230 and an output layer 240.

The ELM 200 has minimal requirements for learning (also termed "training"), mainly because a learning process is performed without an iterative tuning of the hidden nodes 230 in the feed-forward part of the substrate 220. The values of the hidden nodes 230 can be randomly assigned and are not updated or otherwise optimized during the learning process. It is only necessary to adjust the weights (connections) of the substrate 220 with the output layer 240 via, for example, a connection layer 250, which is a simple linear trainable layer that uses the Moore-Penrose pseudo-inverse method (explained later). In other words, the ELM offloads the bulk of the processing to a fixed complex system (i.e., in the connection layer 250), and desired input-output maps are achieved by only adjusting how the state of the ELM is post-processed between the substrate 220 and the output layer 240 in the connection layer 250. The post-processing between the substrate 220 and the output layer 240 enables the ELM 200 to avoid multiple iterations and local minimization for training, while maintaining a good generalization and fast training times.

The ELM 200 is trained as follows. Training data 260 is firstly normalized so that the values of parameters 262 in the training data take a value between 0 and 1 before being input into the ELM 200 through the input layer 210 to train the ELM 200. The training data 260 comprises vectors with a plurality of the (normalized) parameters 262 and corresponding true labels vector 265. The true labels vector 265 are the results that have been observed when the parameters 262 are measured. For example, the parameters 262 might be sensor values measured over time in an industrial process and the true labels vector 265 would be the outcomes of the industrial process. Alternatively, the parameters 262 might be financial data, such as options values or ticker prices, with the outcomes being the values of the underlying stocks or bonds.

The Moore-Penrose pseudo inverse method used in the connection layer 250 is a linear algebra technique used to approximate an inverse of non-invertible matrices and generalizes to arbitrary matrices the notion of matrix inversion. This Moore-Penrose pseudo inverse method can be used in the connection layer 250 of the ELM 200 because of the robustness and minimal computational resources required for performing the method. After the fixed feed-forward part in the substrate 220, a matrix H is built in the connection layer 250 with the output from the substrate 220. The pseudo-inverse matrix H from the output is computed. This pseudo-inverse matrix is multiplied by the true labels vector 265 to get the optimal weights $\beta$ to be used to predict new data examples as:

$$\hat{\mathbf{T}} = \mathbf{H}\hat{\beta}$$

where T is the new data to classify.

The substrate 220 with the hidden nodes 230 is replaced in the quantum implementation by a quantum substrate 220 comprising a plurality of noisy gates. The quantum substrate 220 is a dynamical quantum system with a number of qubits.

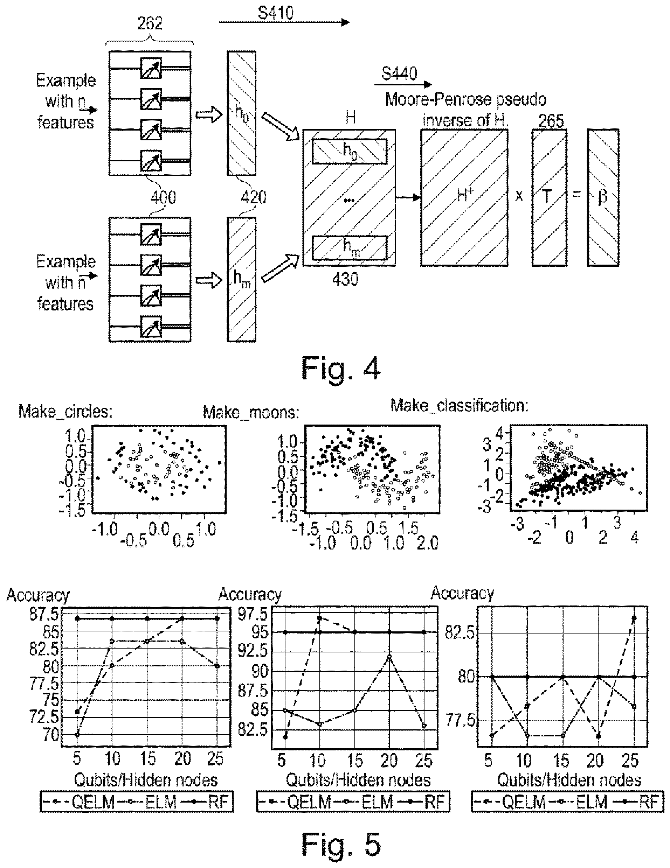

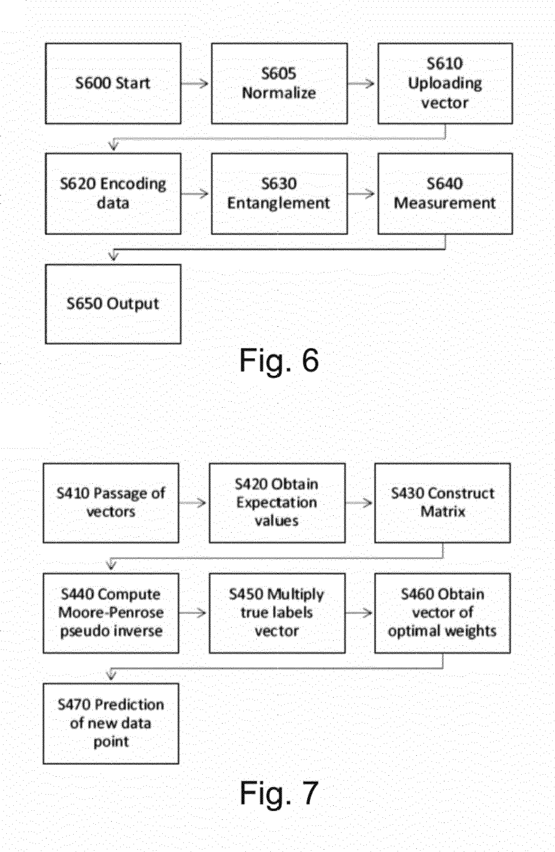

The training method for the Quantum ELM (QELM) is outlined in Figs. 4 and 6. The first step in the training method is to normalize the values of the parameters 262 in step S605 and then upload the vectors with the training data 260 in step S610 before encoding the training data 260 in step S620. Various strategies can be adopted for encode the training data 260 for quantum machine learning models. Non-limiting examples include, but are not limited to, basis encoding, amplitude encoding, qsample encoding angle encoding and Hamiltonian encoding. In the non-limiting implementation described in this document, angle encoding is used for the step S620. As will be explained later, it is possible for the data to be redundantly coded.

In this method, input features vector 400 x = (x1, ..., xN) is input through input/output device 30 to the quantum processor 50. The input features vector 400 x has N features or parameters. The input features vector 400 $x = (x_1, ..., x_N)$ is then uploaded in step S610 using single-qubit rotation gates applied to the initialized state as follows:

$$|x\rangle = U(x_i)|0\rangle^{\otimes n}$$

where $U$ is a unitary operation parameterized by $x_i$ such as $Rx, Ry, Rz$ rotational gates. This encoding strategy encodes the $N$ features of the input feature vector 400 $x$ into $n$ qubits with a constant circuit depth, where $n \geq N$, so it is a very efficient in terms of operations (see, for example, LaRose and Coyle, 2020, "Robust data encodings for quantum classifiers, Phys. Rev. A 102, 032420, see https://arxiv.org/abs/2003.01695 or https://doi.org/10.1103/PhysRevA.102.032420), but is not optimal in the number of qubits used (as noted by Grant et al., 2018, "Hierarchical quantum classifiers", NPJ Quantum Information, 2018 4:65, pages 1-8, https://www.nature.com/articles/s41534-018-0116-9 or https://doi.org/10.1038/s41534-018-0116-9). Limitation of this prior art means that it is not possible to encode all the N features in the input feature vectors 400 $x$ at once, which is a requirement for prior art extreme learning machine methods.

The quantum substrate 220 is programmed in the quantum processor 50 and is constructed by a cascade of controlled-NOT (CNOT or CX) gates to generate entanglement in step S630 between the qubits. The CX gates are inherently noisy and this noise introduces non-linearities into the quantum substrate 200. A measurement of a suitable observable M is made for all the qubits or for a subset of the qubits in step S640. The measurement must result in a real number, and this means that the corresponding quantum operator must be Hermitian, i.e., having eigenvalues which are real values. Non-limiting of such operators are Pauli X/Y/Z operators. In this case, the average of Z observables is measured on each qubit over many runs of the quantum circuit in step S630. The final output in step S650 is then a vector of real expectation values 420.

The circuit in the quantum substrate 220 is depicted in Fig. 3 which shows that qubits are initialized at the zero state |0>. The classical information from the input feature vector 400, i.e., $x_1$, $x_2$, $x_3$, $x_4$ etc. is introduced, in this example, as rotations along the x-axis Rx and a correlation between the qubit is generated by using the cascade of the controlled-NOT gates. Finally, the measurement operator is applied.

As noted above, the passage of all the examples of the training data 260 examples cannot be done directly using a quantum dynamical system because the size of the dataset with the training data 260 is large and the amount of training data 260 that can be passed is limited by the capabilities of the quantum systems with the limited number of qubits available. In method of this document, an intermediate matrix is constructed such that the entire dataset with the training data 260 can be passed through the quantum substrate 220, and training performed in one step as in the original scheme in a quantum-classical fashion. This step is outlined in Fig. 4.

The feature vectors 400 *x* of N features are passed in step S410 shown in Fig. 7 through the quantum substrate 220 to obtain the corresponding output vectors of expectation values 420. The output vectors of expectation values 420 (step S420) are then concatenated to construct a matrix 430 in step S430 where each output vector of expectation values 420 is a row of the matrix 430.

This intermediate representation obtained from the application of the quantum substrate 220 is used to compute the Moore-Penrose pseudo inverse method in step S440 shown in Fig. 7. The Moore-Penrose pseudo-inverse matrix is multiplied in step S450 by true labels vector 265 to obtain the vector 470 of optimal weights $\beta$ (step S460). This implementation enables treatment of all the features in the feature vector 400 at once to implement a true quantum counterpart using the currently available quantum processors 50. The prediction of a new data point (step S470) is then done by multiplying the feature vector 400 by the vector 470 of optimal values $\beta$ in the same way as in the classical ELM.

The concept has been evaluated for standard classification datasets from *sklearn* using the IBM simulator. Better results than the classical ELM counterpart and comparable results to the default Random Forest of *sklearn*. The results are shown in Fig. 6. What is expected from the real quantum processor 50 is not only an enhancement of performance but also a significant improvement in the total runtime compared to ELM.

As already noted above, it is possible to introduce redundancy into the data encoding in step S620 by using more qubits n as the hidden nodes 230 than the number of features N which are to be encoded. A simple example will illustrate this. Let it be supposed that there are two features N and four qubits n. In this case the "extra" two qubits can redundantly encode the same feature as the other two qubits.

In one aspect the redundantly coded data can be modified in some manner. For example, the data could be multiplied by the qubit number before it is encoded. This means that the data is projected in a more disperse way on the Bloch sphere. This is interesting in the quantum case because the redundant qubits encoding the same feature are then entangled through the controlled-X (CX) cascade in the quantum substrate 220. Simulations indicate an improvement using this redundancy technique, especially in the quantum case where entanglement is also present.

The simulation will now be described in more detail. A combination of Pennylane quantum simulator by Xanady and Qiskit quantum simulator by IBM was chosen for performing the quantum simulations. Pennylane was used to build quantum circuits. A noise-free simulator *qiskit.aer* provided by Qiskit was used to run the quantum circuits on currently available (classical) hardware. The noiseless simulations and noisy simulations have been executed on 1024 shots. The number of shots is a number of executions of a quantum algorithm on a QPU.

The Noise Model object provided by Qiskit was used for the noisy simulations. The Noise Model simulates different noise parameters of IBM quantum processors on the quantum circuits. The noise model is built using 16 qubits *ibmq guadalupe* quantum computer noise parameters.

For depolarizing noise, an average CNOT error ofp was set equal to $p \approx 0.01$ and an average readout error of $p \approx 0.02$. For thermal relaxation noise, an average amplitude damping $T1 \approx 93$ μs and an average phase damping $T2 \approx 95$ μs was used.

As noted above, the data for the datasets were selected from synthetically generated data using the scikit-learn library (SKL) and real data from the UCI Machine Learning Repository, hosted by the University of California in Irvine. The datasets are presented below with a short description of a feature, a number of examples, and a number of features. The dataset names use the format of [UCI | SKL]_name, wherein the first part of the name (UCI) describes the data source, and the second part (SKL) is the name of the dataset.

SKL_make-circles: produces Gaussian data with a spherical decision boundary for binary classification. There are 100 samples (points), and 2 features (x, y).

SKL_make-gaussian_quantiles: divides a single Gaussian cluster into near-equal-size classes separated by concentric hyperspheres for binary classification. There are 100 samples (points), and 2 features (x, y).

SKL_make-moons: produces two interleaving half circles for binary classification. There are 100 samples (points), and 2 features (x, y).

SKL_make-classification: generate a random binary classification problem with some noise. There are 100 samples (points), and 2 features (x, y).

UCI_breast-cancer: there are 569 samples (patients), and 30 features (thickness, cell size uniformity, etc.). The variable to predict is encoded as 2 (benign) and 4 (malignant).

The datasets are divided into two subsets, for example, a training subset and a test subset. In one non-limiting example, 80% of the dataset is divided for the training subset and 20% of the dataset is remained for the test subset. A various number of qubits are selected depending on the number of features of each problem to be solved. Therefore, the scalability of the simulated quantum systems is tested using the various number of qubits. However, the quantum system even with the highest number of qubits is still not sufficient to keep the quantum simulations as close as possible to the currently available hardware parameters.

The problem to be solved by the quantum simulations is a binary classification problem. Primary metrics have to be chosen carefully since some of the datasets are not "balanced" in the number of labels to predict. A balanced dataset is a dataset in which the output class (i.e., in this case labels to predict) is represented by the same number of input samples. However, imbalanced datasets are much more common. For the balanced datasets, an accuracy metric is defined as follows:

$$Accuracy = \frac{TP + TN}{TP + TN + FP + FN}$$

where TP are true positives, TN are true negatives, FP false positives and FN are false negatives. It can be challenging to obtain sufficient accuracy for the unbalanced datasets. The accuracy metric for the unbalanced datasets is defined using a combination of three metrics as follows:

$$Precision = \frac{TP}{TP + FP}$$

$$Recall = \frac{TP}{TP + FN}$$

$$F1\_score = \frac{2 * (Precision * Recall)}{Precision + Recall}$$

The precision, recall and F1_score (labelled only F1 on figures) metrics are used to evaluate the learning models on the unbalanced datasets. The training process and evaluation process was performed five times using the datasets in order to provide reliable results of the quantum simulations.

The data used for the quantum simulations were synthetically generated from *scikit-learn* library. At the beginning of the quantum simulation, it was checked if the quantum extreme learning model 200 of this document can deal with linearly separable data and not linearly separable data. In the next step, a simple linear model was run for a sanity check to compare with the ELM 200. The simple linear model in one non-limiting example was a linear Support Vector Machine (SVM).

After checking that the QELM 200 was running correctly with the linear data and the non-linear data, the QELM 200 was tested on the real datasets from the UCI Machine Learning Repository (provided by University of California in Irvine), from the ELM 200 and from a Random Forest Classifier (RF) as shown on Fig. 5.

Fig. 5 shows two non-linearly separable datasets (i.e., make-circles, make-moons) and one linearly separable dataset (i.e., make-classification). The linearly separable datasets and the non-linearly separable datasets are balanced in the number of labels to predict. The lower part of Fig. 5 shows results of the accuracy for the datasets and highlights that the use of accuracy is valid when measuring the performance of the QELM set out in this document.

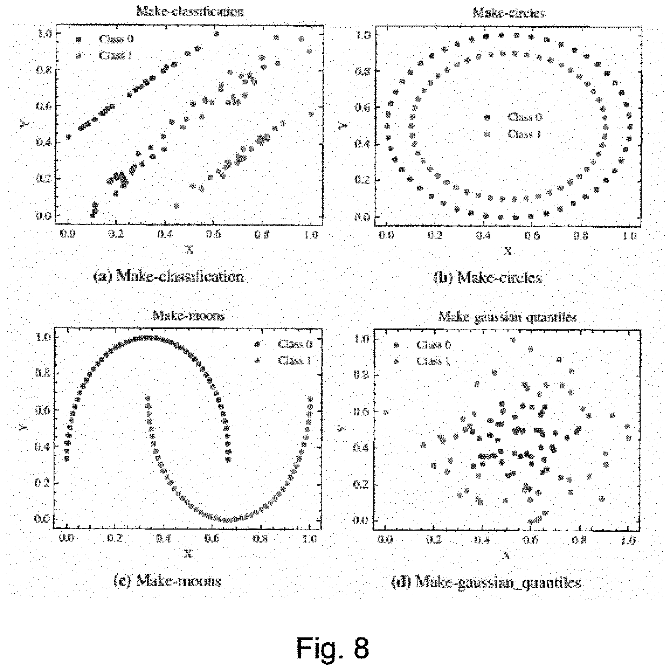

Scikit-learn datasets can also be used to test the QELM 200. Fig. 8 shows one linearly separable dataset (make-classification) and three non-linearly separable datasets (make-circles make-moons and make-gaussian_quantiles). These datasets from scikit are balanced in the number of labels to predict. Therefore, the use of accuracy is valid when measuring the model's performance.

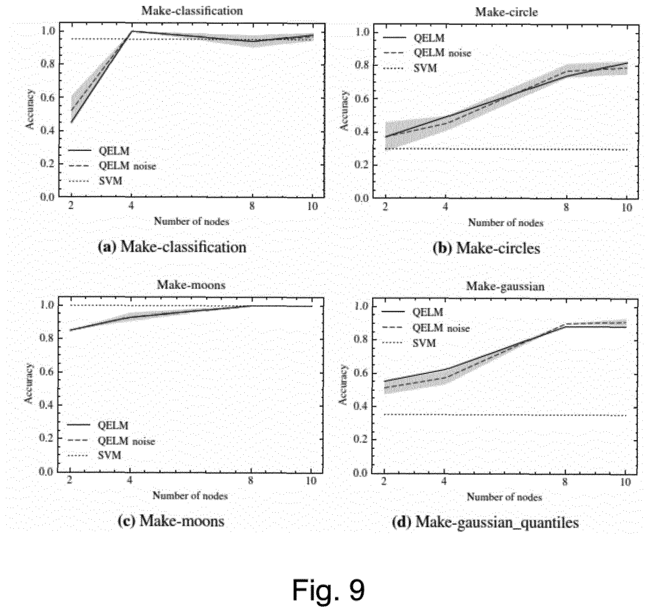

An analysis of scikit-learn database was started with the make-classification dataset. Fig. 9 shows that the quantum system of the current document with two qubits performs worse than the linear SVM baseline. The QELM (i.e., with the quantum substrate 220) with four qubits or more qubits matched the linear SVM baseline. For the non-linearly separable datasets, the QELM 200 outperforms the linear SVM on make-circle dataset as shown on Fig. 9 (b) and make-gaussian dataset as shown on Fig. 9 (d). The QELM 200 is able to classify correctly around 80% of the datasets with the system of eight qubits.

The SVM model classifies around 40% of the examples correctly which is worse than the Random Forest Classifier random model. In the case of the make-moons datasets, the SVM model classifies the test datasets precisely and the QELM 200 has the accuracy of 82.5% for the quantum system of two qubits. The QELM 200 correctly classifies all the datasets with the system of eight qubits. The correct classification of the SVM model may be due to the small number of examples in the dataset and favorable train-test splits, where the linear model was able to split the datasets perfectly with a line. It can be noticed that the noisy simulations are very similar in performance to the noiseless quantum simulations in the case of working with Scikit-learn datasets.

UCI breastcancer. For implementing the dataset containing 30 features with the chosen encoding strategy, 30 qubits would be required to input the information into the quantum system. The encoding strategy is at least one of one of basis encoding, amplitude encoding, angle encoding, qsample encoding and Hamiltonian encoding. To input the information to the quantum system, the dimensionality of the system was reduced with a Principal Component Analysis (PCA) to three features. The same number of qubits has been used for the smallest quantum system that allows to scale up the quantum system to twelve qubits for the biggest quantum system.

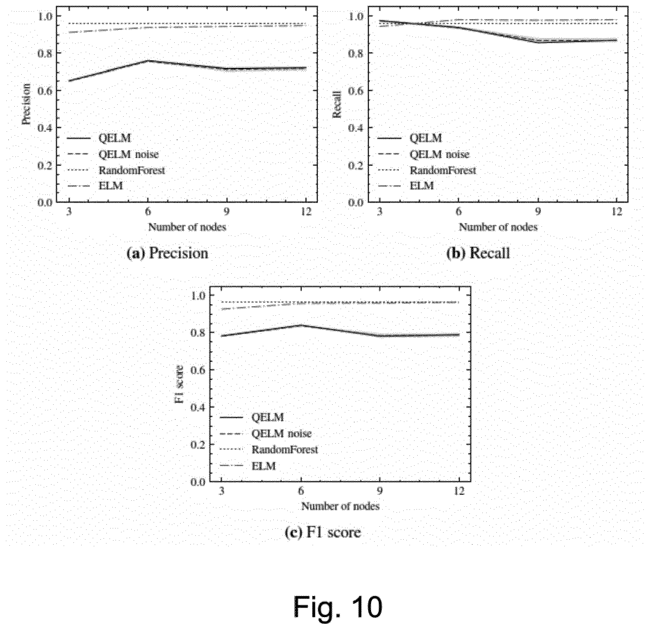

As shown on Fig. 10, the QELM 200 obtains around 80% of F1 score, which is still less than the classical models, such as the Random Forest Classifier (RF) or the ELM. The RF model and the ELM obtained around 97% of F1 score. However, the QELM 200 model obtains similar results with other quantum methods like a quantum-kernel support vector machine (qKSVM) and a quantum distance classifier (qDS) with a higher number of features and real quantum hardware.

## Reference Numerals

| | |
|---|---|
| 10 | Computing system |
| 20 | Central processing unit |
| 25 | Data storage unit |
| 30 | Input/output devices |
| 35 | Graphics processing unit |
| 40 | Field programmable gate array |
| 50 | Quantum processor |
| 60 | Computer network |
| | |
| 200 | Extreme learning machine |
| 210 | Input layer |
| 220 | Substrate |
| 230 | Hidden nodes |
| 240 | Output layer |
| 250 | Connection layer |
| 260 | Training data |
| 262 | Parameters |
| 265 | True labels vector |
| | |
| 400 | Feature vectors |
| S410 | Passage of vectors |
| S420 | Obtain expectation values |
| 420 | Expectation values |
| S430 | Construct Matrix |
| 430 | Matrix |
| S440 | Compute Moor-Penrose pseudo inverse |
| S450 | Multiply true labels vector |
| 460 | True labels vector |
| S460 | Obtain vector of optimal weights |
| 470 | Vector of optimal weights |
| S470 | Prediction of new data point |

## Claims

1. A method for implementing a quantum-based extreme learning machine (200) using a quantum processor (50) implementing a quantum substrate (220) comprising a plurality of noisy quantum gates (230), the method comprising:

   - uploading (S610) an input features vector (400) through the quantum substrate (220);
   - applying, to the input features vector (400) at the output of the quantum substrate (220), a vector (470) of optimal weights $\beta$ generated from training data (260) using the quantum processor (50) and thereby generating a vector of expectation values (420);
   - and thereby prediction (S470) of a new data point b; and
   - outputting (S650) the vector of real expectation values (420).

2. A method for training a quantum-based extreme learning machine (200) using a quantum processor (50) implementing a quantum substrate (220) and a set of training data (260), wherein the training data comprises input features vectors (400) with a plurality of N parameters (262) and true labels vector (265), wherein the quantum substrate comprises a plurality of noisy quantum gates (230), the method comprising:

   - uploading (S610) the training data (260) to the quantum processor (50);
   - encoding (S620) the uploaded training data (260);
   - passing (S410, S630) a plurality of subsets of the input features vector (400) from the training data (260) through the quantum substrate (220) to obtain a plurality of output vectors of expectation values (420);
   - concatenation (S420) of the plurality of output vectors of expectation values (420) to construct (S430) a matrix (430);
   - computation (S440) of an inverse matrix (H) from the matrix (430); and
   - multiplication (S450) of the inverse matrix (H) by the true labels vector (265) to obtain a vector (470) of optimal weights $\beta$.

3. The method of claim 2, wherein the inverse matrix is a Moore-Penrose pseudo inverse matrix.

4. The method of claims 2 or 3, wherein the encoding (S620) is one of basis encoding, amplitude encoding, angle encoding, qsample encoding and Hamiltonian encoding.

5. The method of one of claims 2 to 4, wherein the quantum substrate comprises n qubits and wherein n<N.

6.  The method of one of claims 2 to 5, wherein each output vector of expectation values (420) is a row of the matrix (430).

7.  The method of one of claims 2 to 6, further comprising normalizing (S605) values of the training data (260).

8.  The method of one of claims 2 to 7, further comprising redundantly encoding (S620) values of the training data (260).

9.  A computing system (10) for implementing a quantum-based extreme learning machine (200) using a quantum processor (50) implementing a quantum substrate (220), the computing system (10) comprising:

    - a plurality of input/output devices (30) for inputting training data (260) and outputting a vector (470) of optimal weights $\beta$;
    - a gate-based quantum processor (50) implementing an extreme learning machine ELM (200) having an input layer (210); and
    - a quantum substrate (220) with a plurality of noisy quantum gates (230), an output layer (240) and a connection layer (250).

10. The computing system (10) of claim 9, wherein the quantum substrate (50) is a quantum system with a number of qubits.

11. The computing system (10) of claim 9 or 10, wherein the noisy quantum gate (230) is a controlled NOT gate (C-NOT).

Fig. 1

Fig. 2

Fig. 3

Fig. 4

Make_circles:    Make_moons:    Make_classification:

Fig. 5

Fig. 6

Fig. 7

(a) Make-classification

(b) Make-circles

(c) Make-moons

(d) Make-gaussian_quantiles

Fig. 8

(a) Make-classification

(b) Make-circles

(c) Make-moons

(d) Make-gaussian_quantiles

Fig. 9

(a) Precision

(b) Recall

(c) F1 score

Fig. 10

**EP 4 336 416 A1**

Europäisches
Patentamt

European
Patent Office

Office européen
des brevets

# EUROPEAN SEARCH REPORT

**Application Number**

EP 23 19 6651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEISUKE FUJII ET AL: "Quantum reservoir computing: a reservoir approach toward quantum machine learning on near-term quantum devices", ARXIV.ORG, CORNELL UNIVERSITY LIBRARY, 201 OLIN LIBRARY CORNELL UNIVERSITY ITHACA, NY 14853, 10 November 2020 (2020-11-10), XP081810468, * abstract * * Chapters I-V; page 1 – page 11; figures 1-4 * | 1-11 | INV. G06N10/20 G06N10/60 G06N3/08 G06N3/047 |
| X | CN 110 009 108 A (UNIV SHENYANG AEROSPACE) 12 July 2019 (2019-07-12) * the whole document * | 1-11 | |
| A | BRUNNER D ET AL: "Tutorial: Photonic Neural Networks in Delay Systems", ARXIV.ORG, CORNELL UNIVERSITY LIBRARY, 201 OLIN LIBRARY CORNELL UNIVERSITY ITHACA, NY 14853, 5 November 2021 (2021-11-05), XP091094310, DOI: 10.1063/1.5042342 * abstract * * Chapter I; page 1 – page 8; figures 1-5 * * section "C. Electro-optical reservoirs and extreme learning machines"; page 10 * | 6 | TECHNICAL FIELDS SEARCHED (IPC) G06N |

The present search report has been drawn up for all claims

| Place of search | Date of completion of the search | Examiner |
|---|---|---|
| The Hague | 8 January 2024 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6651

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2024

| Patent document cited in search report | Publication date | Patent family member(s) | Publication date |
|---|---|---|---|
| CN 110009108 A | 12-07-2019 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22382838 A
- US 94180222

- CN 110009108 A

**Non-patent literature cited in the description**

- **MUJAL et al.** Opportunities in Quantum Reservoir Computing and Extreme Learning Machines. *Arxiv.Org,* 10 July 2021
- Quantum reservoir computing: a reservoir approach toward quantum machine learning on near-term quantum devices. **KEISUKE FUJII et al.** Arxiv.org. Cornell University Library, 10 November 2020

- **LAROSE ; COYLE.** Robust data encodings for quantum classifiers. *Phys. Rev. A,* 2020, vol. 102, 032420, https://arxiv.org/abs/2003.01695
- **GRANT et al.** Hierarchical quantum classifiers. *NPJ Quantum Information,* 2018, vol. 4 (65), 1-8, https://www.nature.com/articles/s41534-018-0116-9